# EUROPEAN PATENT APPLICATION

(11) **EP 1 379 057 A2**
(43) Date of publication of application: **07.01.2004**
(21) Application number: 03015117.9
(22) Date of filing: 03.07.2003
(51) Int. Cl.: H04M 1/02, G02F 1/1335

(54) **Information equipment with a function to display a stereoscopic image**

(30) Priority: 04.07.2002 JP 2002195615
(71) Applicant: Sharp Kabushiki Kaisha, Osaka-shi Osaka (JP)
(72) Inventor: Miyata, Yusuke, Higashihiroshima-shi, Hiroshima (JP); Okuda, Kei, Higashihiroshima-shi, Hiroshima (JP)
(74) Representative: Müller - Hoffmann & Partner

(57) **Abstract**

The present invention provides a mobile phone capable of displaying a stereoscopic image on a display unit. When the mobile phone is powered on, it displays a stereoscopic screen (402,403) as a start screen.

## Description

### BACKGROUND OF THE INVENTION

### Field of the Invention

The present invention relates generally to information equipment and particularly to information equipment having a function to display a stereoscopic image.

### Description of the Background Art

In recent years, mobile equipment is increasingly miniaturized and enhanced in function. For example, mobile phones have a screen increased in size to allow a large amount of textual information, an image and the like to be displayed.

Japanese Patent Laying-Open No. 10-108152 discloses a device having two CCD cameras and capable of displaying a stereoscopic image. More specifically, there is a need for information equipment providing not only a simple display of a text but a display utilizing a stereoscopic image as described above as information equipment has a display screen increased in size to allow more information to be displayed, and also colored to allow an image to be displayed achieving sufficient practical utility.

However, it is difficult to determine from information equipment's appearance whether the equipment is capable of stereoscopic displaying. Whether the equipment is capable of stereoscopic displaying can be recognized only after a desired stereoscopic image is displayed on the equipment, which is disadvantageously cumbersome.

### SUMMARY OF THE INVENTION

Therefore an object of the present invention is to provide information equipment readily recognizable as to whether it has a stereoscopic display function.

The above object is achieved by the information equipment including: a power-on unit powering on the information equipment; a display unit capable of displaying a stereoscopic image; and a controller exerting control to display a stereoscopic image by the display unit when the power-on unit powers on the information equipment.

In accordance with the present invention in another aspect the information equipment includes: a power-on unit powering on the information equipment; a display unit switching and displaying a planar image and a stereoscopic image; and a controller exerting control to display a stereoscopic image on the display unit when the power-on unit powers on the information equipment.

In accordance with the present invention in still another aspect the information equipment includes: a detector detecting open and closed positions of the information equipment; a display unit capable of displaying a stereoscopic image; and a controller exerting control to display a stereoscopic image on the display unit when the detector detects that the information equipment closed is opened.

The foregoing and other objects, features, aspects and advantages of the present invention will become more apparent from the following detailed description of the present invention when taken in conjunction with the accompanying drawings.

### BRIEF DESCRIPTION OF THE DRAWINGS

In the drawings:
Fig. 1 is a block diagram showing a configuration of a main portion of a mobile phone in an embodiment;
Fig. 2A is an overall view of a foldable mobile phone 201 flipped open, as seen at its internal side (or a key bearing side), and Fig. 2B is an overall view thereof closed, as seen at its external (back) side;
Fig. 3 is a plan cross section of a configuration of a main portion of a liquid crystal display of a liquid crystal module (a main screen) 109;
Fig. 4 shows a specific example of a display screen in liquid crystal module (the main screen) 109; and
Fig. 5 is a flow chart representing a process performed in mobile phone 201 to start the phone from a power-off state and thereafter.

### DESCRIPTION OF THE PREFERRED EMBODIMENTS

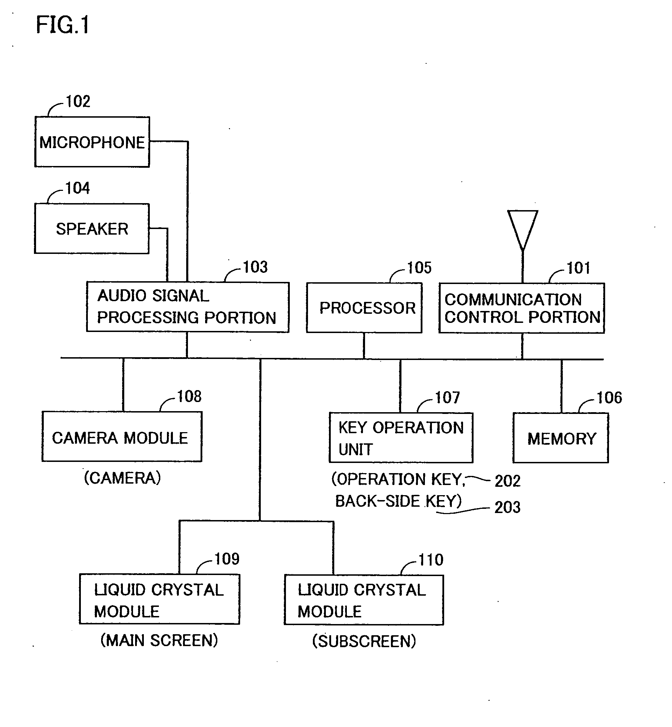

The present invention in an embodiment will be described with reference to Figs. 1-5. While the present invention is applicable to any information equipment, hereinafter as a suitable embodiment a foldable, camera-equipped mobile phone will be described.

Fig. 1 is a block diagram showing a configuration of a main portion of the mobile phone in the present embodiment. In the present embodiment the mobile equipment includes: a communication control portion 101 controlling a communication with a base station (not shown); an audio signal processing portion 103 receiving an audio signal from a microphone 102 and encoding the signal and also decoding an audio signal received from a counterpart in the call of interest; a speaker 104 reproducing the decoded audio signal; a processor 105 executing a program to generally control the mobile phone; a memory 106 controlled by processor 105; a key operation unit 107 receiving an input from a user; a camera module 108 such as a CCD(Charge Coupled Device) camera used for picking up a typical planar image; a color liquid crystal module 109 for a main screen; and a color liquid crystal module 110 for a subscreen.

Furthermore, key operation unit 107 includes an operation key 202 and a back-side key 203.

Memory 106 stores information required for controlling the mobile phone as well as image information including a planar image and a stereoscopic image. When the mobile phone is to display either one of the image information, processor 105 generally controlling the mobile phone determines whether selected image information is a planar display or a stereoscopic display and the processor 105 provides an optimal image display.

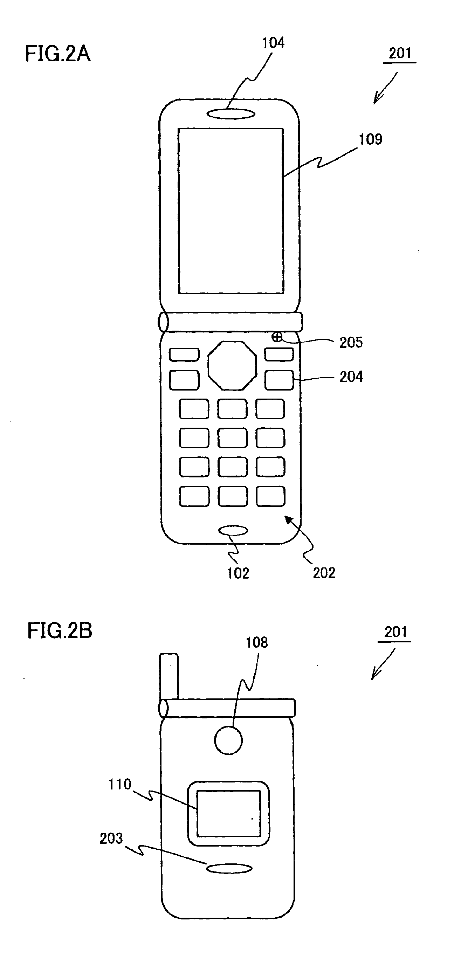

Fig. 2A is an overall view of foldable mobile phone 201 flipped open, as seen at its inner side (or a key bearing side), and Fig. 2B is an overall view thereof closed, as seen at the outer (back) side.

As shown in Fig. 2A, the mobile phone has speaker 104 arranged at the cover at an inner, upper center portion, and microphone 102 arranged at the body at an inner, lower center portion.

Furthermore, operation key 202, formed of numeral keys, a cross key and the like, includes a power supply key 204 for powering on the mobile phone, and a switch 205 detecting whether the cover is open or closed.

As shown in Fig. 2A, liquid crystal module (main screen) 109 is rectangular and arranged at the cover on the inner side, and as shown in Fig. 2B, liquid crystal module (subscreen) 110 is rectangular and arranged at the cover on the outer side in the vicinity of the center. Furthermore, as shown in Fig. 2B, camera module 108 is arranged at the cover on the outer side close to the hinge in the vicinity of the center so that even with mobile phone 201 closed the user can confirm a subject on liquid crystal module (subscreen) 110 in picking up an image. Furthermore, back-side key 203 is arranged under liquid crystal module (subscreen) 110 so that it can be used as a shutter key with mobile phone 201 closed. If the user picks up an image of a subject with mobile phone 201 open, the user confirms the subject on liquid crystal module (main screen) 109 or liquid crystal module (subscreen) 110, while the user uses any of operation keys 202 as a shutter key to pick up an image.

Liquid crystal module (main screen) 109 is configured of a liquid crystal module capable of stereoscopic displaying.

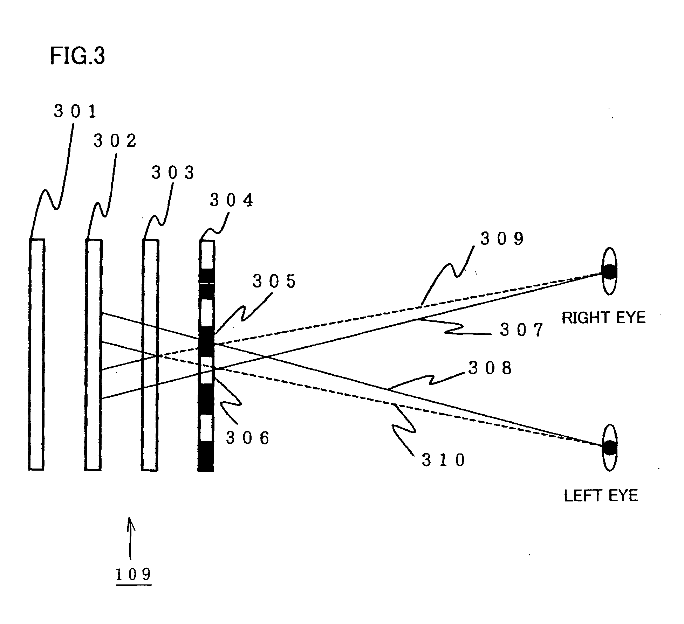

Fig. 3 is a plan cross section of a configuration of a main portion of a liquid crystal display of liquid crystal module (main screen) 109 capable of stereoscopic displaying without using any specific glasses. With reference to Fig. 3, liquid crystal module (main screen) 109 is provided with a back light 301, a liquid crystal device 302 for switching a planar screen and a stereoscopic screen, a phase difference plate 303 patterned in a slit, and a thin film transistor (TFT) liquid crystal device 304 for display.

To display a stereoscopic image on liquid crystal module (main screen) 109, a relationship between a phase of liquid crystal device 302 and that of phase difference plate 303 is changed to interrupt an image for the left eye that is displayed at liquid crystal device 302, so that the image does not pass through an L pixel 306 (displayed by a white pixel in the figure) of TFT liquid crystal device 304 nor is projected on the right eye (a broken line 309). Likewise, an image for the right eye is interrupted so that it does not pass through an R pixel 305 (displayed by a black pixel in the figure) of TFT liquid crystal device 304 nor is projected on the left eye (a broken line 310).

Thus on the viewer's right eye the image for the right eye alone is projected and on his/her left eye the image for the left eye alone is projected. This provides the viewer's right and left eyes with different images and as a result the viewer can perceive a stereoscopic image providing a sense of depth.

Furthermore to allow liquid crystal module (main screen) 109 to display a planar image, liquid crystal device 302 is electrically controlled to change the device's polarization state to prevent optical interruption provided by phase difference plate 303. Thus in the mobile phone of the present embodiment an optical characteristic of liquid crystal device 302 can be controlled to allow a planar image and a stereoscopic image to be switched and displayed.

Note that while in the present invention a liquid display configured as described above is used to implement a stereoscopic display on liquid crystal module (main screen) 109, a configuration using a lenticular lens or a similar configuration may be used that is a display device utilizing parallax of both eyes to provide a stereoscopic display. Furthermore while in the above configuration liquid crystal module (main screen) 109 displays a planar image and a stereoscopic image, as switched, in another embodiment of the present invention the mobile phone may be configured to be capable of displaying only a stereoscopic image.

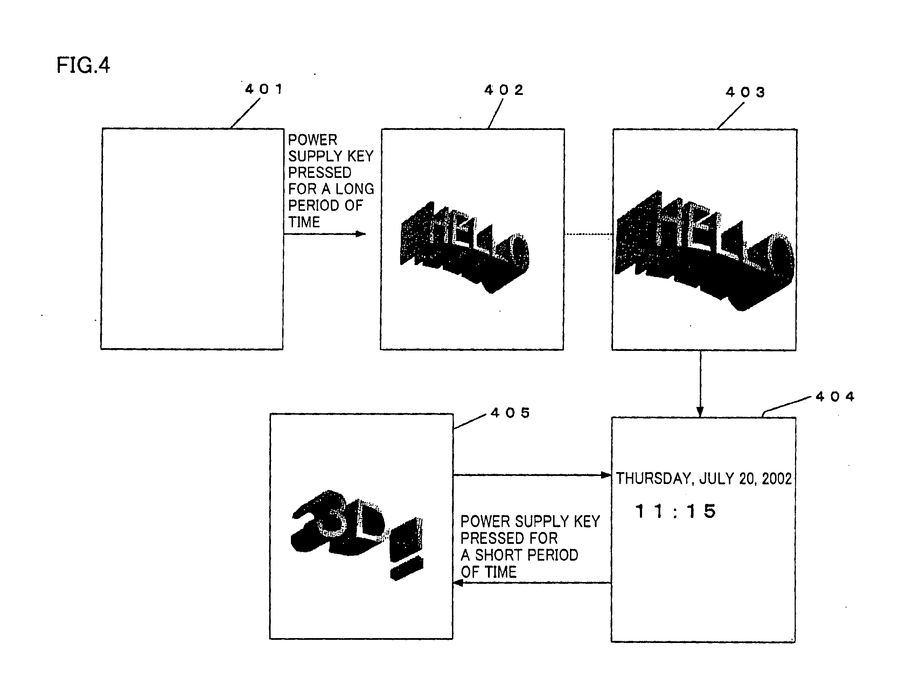

Fig. 4 shows a specific example of a screen displayed on liquid crystal module (main screen) 109. In the present embodiment mobile phone 201 in a power-off state 401 when power supply key 204 is pressed for a long period of time allows liquid crystal module (main display) 109 to display for a predetermined period of time a start screen 402 providing a display increasing in size in steps and a stereoscopic screen 403 thus displayed, and thereafter an idol screen 404.

Mobile phone 201 that continues to display start screen 402 to stereoscopic screen 403 for the predetermined period of time can help the user to determine that mobile phone 201 has a function to display a stereoscopic image. For stereoscopic display equipment that does not require glasses therefor, recognizing a stereoscopic image displayed requires appropriately positioning the right and left eyes. Mobile phone 201 displaying start screen 402 to stereoscopic screen 403 when it is powered on allows the eyes to acclimate to an appropriate position to see a stereoscopic image.

Note that in mobile phone 201 of the present embodiment start screen 402 to stereoscopic screen 403 are previously stored in memory 106, as divided in steps, and for each step a screen is read in order and displayed. This can be achieved as follows: for each step a stereoscopic screen is displayed only for a determined period of time and subsequently a screen of the following step is called and displayed for a predetermined period of time, and this series of operations is performed by a set number of steps. Furthermore, previously setting a screen to be displayed for start screen 402 enables the user to select for example at initialization which screen to be displayed. Note that since mobile phone 201 in the present embodiment can switch and display a planar image and a stereoscopic image, a planar image may be stored by a user to memory 106 and selected as start screen 402 and displayed.

Furthermore, with idol screen 404 displayed, a stereoscopic screen and a planar screen may be alternately switched and displayed. More specifically, when mobile phone 201 displaying idol screen 404 of Fig. 4 has power supply key 204 pressed for a short period of time, mobile phone 201 may display stereoscopic screen 405. Previously setting stereoscopic screen 405 among a plurality of screens previously stored in mobile phone 201 at memory 106, enables any screen to be set as stereoscopic screen 405. Furthermore, when mobile phone 201 displaying stereoscopic screen 405 has power supply key 204 pressed for a short period of time, mobile phone 201 displays planar, idol screen 404. Previously setting planar, idol screen 404 among a plurality of screens previously stored in mobile phone 201 at memory 106, enables any screen to be set as screen 404.

Furthermore, as described in the present embodiment, when information equipment is foldable mobile phone 201 and has switch 205 detecting that the phone's cover is opened, the equipment may be driven by a detection provided by switch 205 to display stereoscopic screen 405. The present information equipment displaying these stereoscopic screens enables a user to confirm whenever necessary that the information equipment has a stereoscopic display function.

In particular, when the present information equipment is foldable, mobile equipment 201 and has switch 205 detecting that the phone's cover is opened, displaying a start screen similar to the Fig. 4 start screen 402 to stereoscopic screen 403 when the cover is opened can also help acclimate the user's eyes.

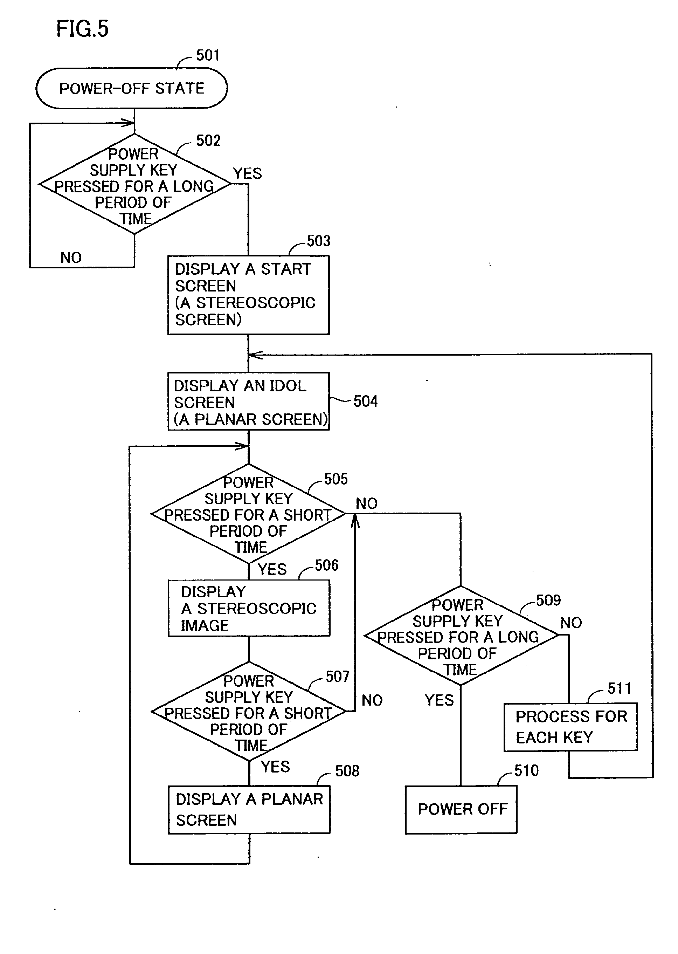

Fig. 5 is a flow chart representing a process performed in mobile phone 201 to start the phone from a power-off state and thereafter.

With reference to Fig. 5, processor 105 initially monitors a signal received from key operation unit 105 and determines whether, as counted from a power-off state (step 501), power supply key 204 has been pressed for a period longer than a predetermined period of time (step 502). If processor 105 determines that key 204 has been pressed longer than the predetermined period of time to provide an instruction to start the phone (YES at step 502), processor 105 displays on liquid crystal module (main screen) 109 a start screen corresponding to a preset stereoscopic screen (step 503) and also sets mobile phone 201 to have a usable state. Previously providing a setting to display a stereoscopic screen on the start screen enables the user to see a favorite screen when mobile phone 201 is started.

Note that while the start screen is not limited to a stereoscopic screen and may be set to be a planar screen, in the present embodiment the start screen is a stereoscopic screen for the sake of illustration. More specifically, when at step 503 the start screen's display ends, processor 105 displays a planar, typical idol screen on liquid crystal module (main screen) 109 (step 504). Note that although not shown in Fig. 5, when the start screen is a planar screen and the planar start screen's display ends, at step 504 processor 105 also displays an idol screen.

At step S504 with an idol screen displayed when processor 105 detects from a signal received from key operation unit 105 that a key has been pressed, processor 105 determines details (step 505). If processor detects from the received signal that power supply key 204 has been pressed for a short period of time (YES at step 505) processor 105 displays a stereoscopic screen on liquid crystal module (main screen) 109 (step 506). Thus the user can display his/her favorite stereoscopic image on liquid crystal module (main screen) 109.

Furthermore when in that condition processor 105 detects from a signal received from key operation unit 105 that power supply key 204 has again been pressed for a short period of time (YES at step 507) processor 105 displays a planar screen on liquid crystal module (main screen) 109 (step 508). Processor 105 performing such a process enables the user pressing power supply key 204 for a short period of time to display a stereoscopic screen and a planar image repeatedly on liquid crystal module (main screen) 109.

If processor 105 detects that a key pressed while an idol screen is displayed at step S504 is not power supply key 204 pressed for a short period of time (NO at step 505) then the processor 105 determines whether it is power supply key 204 pressed for a long period of time (YES at step 509). If so processor 105 proceeds with a step to turn off the power (step 510) and returns to the power-off state of step 501.

Furthermore, if power supply key 204 is neither pressed for a long period of time (NO at S509) then processor 105 proceeds with a step corresponding to each pressed key (step 511) and then returns to step 504 to display an idol screen on liquid crystal module (main screen) 109. Processor 105 performing such a process enables the user pressing power supply key 204 for a short period of time to switch alternately and display a stereoscopic screen and a planar screen on liquid crystal module (main screen) 109.

Although not shown in Fig. 5, processor 105 may stereoscopically display a screen displayed at step 510 in the power-off process. This allows the user to enjoy a stereoscopic image different than when the phone is started.

While in the above embodiment the present information apparatus has been described as mobile phone 201, the present information equipment is not limited to a mobile phone and other types of information equipment can also achieve a similar effect.

Thus the present information equipment displays a stereoscopic image when it is powered on. If the user does not know whether the information equipment has a function capable of displaying a stereoscopic image, the user can readily determine that the equipment has a stereoscopic image display function.

Furthermore, for stereoscopic display equipment which does not require glasses therefor, recognizing a stereoscopic image displayed requires seeing it with the right and left eyes positioned as appropriate. In that case, the present information equipment that displays a stereoscopic image when it is powered on allows the user to acclimate his/her eyes to a position appropriate for seeing the stereoscopic image.

Although the present invention has been described and illustrated in detail, it is clearly understood that the same is by way of illustration and example only and is not to be taken by way of limitation, the spirit and scope of the present invention being limited only by the terms of the appended claims.

## Claims

1. Information equipment comprising:
a power-on unit (107,204) powering on the information equipment;
a display unit (109) capable of displaying a stereoscopic image; and
a controller (105) exerting control to display a stereoscopic image on said display unit (109) when said power-on unit powers on the information equipment.

2. The information equipment of claim 1, further comprising:
a storage (106) storing an image displayed at said display unit (109); and
a selector (107,202) selecting any image from said storage (106) to obtain a selected image, wherein said controller (105) exerts control to display said selected image on said display unit (109).

3. Information equipment comprising:
a power-on unit (107,204) powering on the information equipment;
a display unit (109) switching and displaying a planar image and a stereoscopic image; and
a controller (105) exerting control to display a stereoscopic image on said display unit (109) when said power-on unit powers on the information equipment.

4. Information equipment comprising:
a detector (107,205) detecting open and closed positions of the information equipment;
a display unit (109) capable of displaying a stereoscopic image; and
a controller (105) exerting control to display a stereoscopic image on said display unit (109) when said detector (107,205) detects that the information equipment closed is opened.
